Europäisches Patentamt

European Patent Office

Office européen des brevets

(19)

(11) Veröffentlichungsnummer: **0 337 154**
**A2**

(12) **EUROPÄISCHE PATENTANMELDUNG**

(21) Anmeldenummer: 89104797.9

(22) Anmeldetag: 17.03.89

(51) Int. Cl.⁴: **B01D 35/30 , B01D 23/04**

(30) Priorität: 12.04.88 DE 3812085

(43) Veröffentlichungstag der Anmeldung:
18.10.89 Patentblatt 89/42

(84) Benannte Vertragsstaaten:
AT BE CH FR GB IT LI LU NL SE

(71) Anmelder: GAF CORPORATION
1361 Alps Road
Wayne, N.J. 07470-3686(US)

(72) Erfinder: Behnke, Rainer
Am Marienfeld 2
D-5013 Elsdorf-Heppendorf(DE)
Erfinder: Kierdorf, Frank
Leuchterstrasse 170
D-5000 Köln 80(DE)

(74) Vertreter: Schubert, Siegmar, Dipl.-Ing. et al
Dipl.-Ing. G.Dannenberg Dr. P. Weinhold Dr.
D. Gudel Dipl.-Ing. S. Schubert Dr. P. Barz
Grosse Eschenheimer Strasse 39
D-6000 Frankfurt am Main 1(DE)

(54) Filter für unter Druck stehendes Fluid.

(57) Bei einem Filter für unter Druck stehendes Fluid mit einem Gefäß (1), welches einen Filterkessel sowie einen gegen den Filterkessel spannbaren Deckel (2) aufweist, hat ein in den Filterkessel einsetzbarer Stützkorb (12) einen Flansch (11) mit einem nach innen und oben offenen Profil (15, 16). Hierin kann ein Filterdichtelement (18) eines ringförmigen Filterbeutelträgers (17) passend eingesetzt werden. Um eine vollständige Dichtwirkung insbesondere gegen Übertritt ungefilterten Fluids in das gefilterte Fluid in dem Filter zu erreichen, ist aus dem profilierten Filterdichtelement (18) eine nach oben und nach außen offene Nut (19) ausgeformt, die einen inneren O-Ring (20) aufnimmt.

Fig. 1

## Filter für unter Druck stehendes Fluid

Die Erfindung betrifft ein Filter für unter Druck stehendes Fluid nach dem Oberbegriff des Anspruchs 1.

Bei einem derartigen bekannten Filter dient der den Filterkorb tragende Flansch zugleich als Dichtungsflansch und als Halteflansch für den Filtersack (DE-PS 21 24 717). Hierzu weist der Flansch zwei zueinander konzentrische Kanäle auf, von denen der eine nach oben zu dem Deckel des Gefäßes offen ist und der andere nach unten zu dem Flansch hin geöffnet ist. In den beiden konzentrisch zueinander angeordneten Kanälen liegen zwei O-Ringe, die durch eine Ringzone des Flansches voneinander getrennt sind. Außerdem weist der Flansch zwischen dem inneren Kanal und einer innenliegenden Seitenfläche eine annähernd L-förmige Nut als nach innen und oben offenes Profil auf. In die L-förmige Nut kann ein Wulst an der Oberseite des Filtersackes eingelegt werden. Der Wulst stellt ein Filterdichtelement mit in unbelastetem Zustand rundem Querschnitt dar. Beim Schließen des Deckels legt sich der Wulst bzw. dieses Filterdichtelement gegen den unteren Teil der L-förmigen Nut und die Unterseite des Deckels dichtend an. Damit soll zusätzlich zur mechanischen Fixierung des Filtersackes eine Abdichtung erreicht werden, die den Übertritt des in den Filterbeutel geleiteten ungefilterten Fluid über das obere Filterbeutelende und damit eine Umgehung des Filterwerkstoffes in den Raum zwischen Filterbeutel und Filterkorb verhindern soll. Es hat sich jedoch gezeigt, daß dieses Ziel nicht in allen Fällen mit Sicherheit erreicht wird. Abgesehen davon ist die gesamte Anordnung zur Abdichtung des Inneren des Filterbeutels verhältnismäßig kompliziert, da insgesamt drei dichtende Elemente zwischen dem Deckel und dem Flansch des Stützkorbs zusammengepreßt werden, ohne daß ein übermäßiges oder ungleichförmiges Spannen der dichtenden Elemente auftreten soll. - Zum Stand der Technik gehören auch Filterbeutel, die statt des im Querschnitt kreisförmigen oberen Wulstes, welcher das Filterdichtelement bildet, mit einem Umschlag oder Saum versehen sein, in den ein biegsamer Reifen mit einem angenäherten Rechteckquerschnitt eingenäht ist (DE-PS 16 11 043). Es ist aber nicht ersichtlich, wie damit die Abdichtung zwischen dem Innenbereich des Filterbeutels und dessen Außenbereich verbessert werden kann.

Dies gilt auch für einen anderen aus der Praxis bekannten Filterbeutel, dessen oberes offenes Ende von einem profilierten Kunststoffring umfaßt ist, der sich nach unten abgestuft verjüngt. Undichtigkeiten zwischen dem Innenbereich dieses Filterbeutels und dessen Außenbereich sind insbesondere wegen axialer Fertigungstoleranzen zu befürchten, die andererseits auch eine plastische Verformung des Filterdichtelements beim Schließen des Deckels des Filters verursachen können.

Der vorliegenden Erfindung liegt daher die Aufgabe zugrunde, bei einer unkomplizierten, fertigungsgünstigen Ausbildung des Filters eine Filterbeutelabdichtung zu schaffen, die einen Übertritt von noch zu filterendem Fluid in das schon filterte Fluid mit größter Sicherheit ausschließt.

Diese Aufgabe wird durch die Ausbildung des Filters der eingangs genannten Gattung mit den in dem kennzeichnenden Teil des Anspruchs 1 angegebenen Merkmalen gelöst.

Das Wesen der Erfindung besteht darin, daß nicht nur das oben an dem Filterbeutelträger bzw. Filterbeutel angebrachte Filterdichtelement für die Abdichtung zwischen dem Innenbereich des Filterbeutels und dessen Außenbereich, insbesondere aber noch innerhalb des Gefäßes, maßgeblich ist, sondern auch im wesentlichen ein in die Nut des Filterelements eingelegter O-Ring. Dabei ist die Nut in besonderer Weise nach oben und nach außen offen ausgeformt, so daß bei einer Verformung des O-Rings durch Aufpressen des Deckels auf den in das Filterdichtelement eingelegten O-Ring dieser nicht nur auf der Unterseite des Deckels anliegt, sondern auch seitlich aus der Nut herausgequetscht wird, um den Filterbeutel in den Stützkorb axial exakt auszurichten. Der O-Ring muß im Verhältnis zu der Nut in dem Filterdichtelement so dimensioniert sein, daß diese Quetschwirkung auftritt. Wesentlich ist eine doppelte Dichtwirkung des in die Nut des Filterelements eingelegten O-Rings, nämlich die Abdichtung des Filtergehäuses - auf der Innenseite des Deckels - nach außen und die Abdichtung zwischen dem gefilterten Fluid und dem noch nicht gefilterten Fluid in dem Filterkessel.

Ein zusätzlicher Vorteil besteht darin, daß ein O-Ring und eine zugehörige Nut auf der Oberseite des Flansches des Stützkorbs entfallen kann, wodurch sich die Fertigung vereinfacht und der Flansch des Stützkorbs mit geringerem Außendurchmesser dimensioniert werden kann. Außerdem bildet der in die Nut des Filterelements eingelegte O-Ring bei Aufpressen des Deckels eine besonders zuverlässige Dichtung, da der Aufpreßdruck nicht um eine Kraftkomponente verringert wird, welche der Deckel sonst auf ein weiteres Dichtelement auf der Oberseite des Flansches des Stützkorbs ableiten würde. Mit anderen Worten, der Druck des Deckels wirkt ausschließlich auf den O-Ring in der Nut des Filterdichtelements.

Wie oben bereits ausgeführt, ist der ringförmige Flansch des Stützkorbs nach Anspruch 2 so ausgebildet, daß er außer dem nach innen und oben offenen Profil, welches das Filterdichtelement an dem Filterbeutel bzw. Filterbeutelträger aufnimmt, nur eine konzentrische Nut aufweist die nach unten offen ist und einen zweiten O-Ring aufnimmt, der sich auf den Filterkessel dichtend anlegt, wenn der Deckel aufgepreßt wird.

Nach Anspruch 3 geht das Filterdichtelement des Filterbeutelträgers bevorzugt in einen annähernd kegelstumpfförmigen, nach unten reichenden Einsatz über, an dem ein Filterbeutel angebracht ist. Die Anbringung des Filterbeutels an dem Filterbeutelträger kann in verschiedener Weise erfolgen, beispielsweise durch Kleben, Klemmen, Anspritzen des Filterbeutels sowie Schweißen.

Zur bequemen Entnahme des Filterbeutels aus dem Stützkorb sind nach Anspruch 4 an dem Filterbeutelträger vorteilhaft Handgriffe angeordnet, und zwar dergestalt, daß die Handgriffe zum Austausch des Filterbeutels von oben bequem ergriffen werden können.

Ein Ausführungsbeispiel der Erfindung wird im folgenden anhand einer Zeichnung mit drei Figuren erläutert. Es zeigen:

Fig. 1 einen Schnitt durch den oberen Abschnitt des Filters, der als Druckfilter ausgebildet ist,

Fig. 2 eine Einzelheit des Filters nach Fig. 1 ebenfalls im Schnitt, nämlich durch das Filterdichtelement des ringförmigen Filterbeutelträgers und

Fig. 3 eine Draufsicht auf das Filterdichtelement zur Veranschaulichung der Lage der Handgriffe.

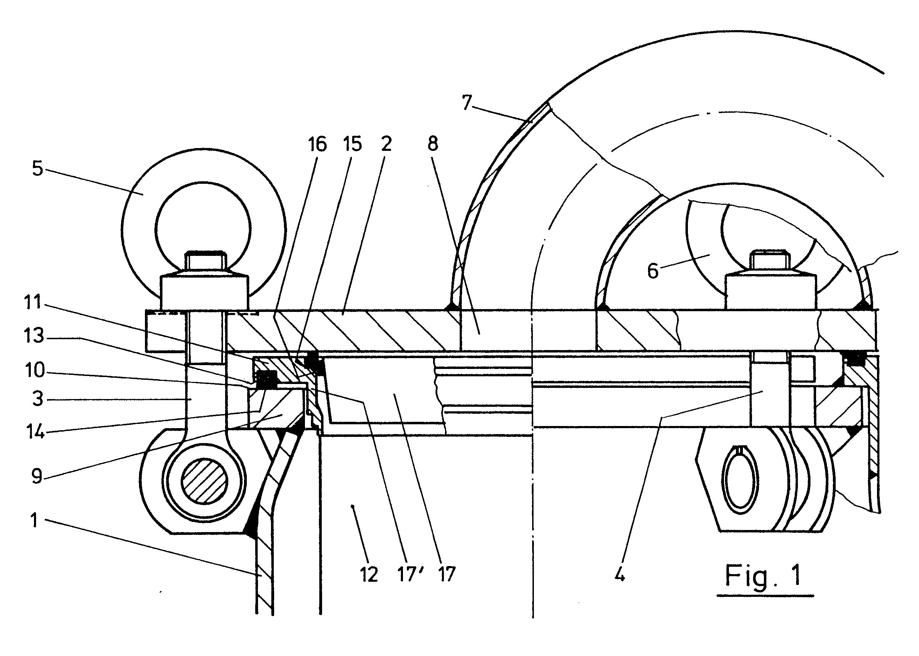

In Fig. 1 ist ein im wesentlichen als Schweißkonstruktion ausgeführtes Filter abschnittsweise dargestellt, welches ein hohles, annähernd zylindrisches Gefäß 1 umfaßt, von dem ein Wandteil eines Filterkessels erkennbar ist. Das Gefäß kann sich an seinem nicht dargestellten unteren Abschnitt zu einer Ausflußöffnung verjüngen. Oben ist das Gefäß mit einem Deckel 2 abgeschlossen, der durch im Abstand längs des Umfangs in der Nähe des oberen Rands des Gefäßes angeschweißte Niederhaltebolzen - dargestellt sind die Niederhaltebolzen 3 und 4 - sowie Knebelköpfe - gezeigt sind die Knebelköpfe 5 und 6 - in Richtung auf das Gefäß gepreßt wird. Der Deckel weist eine gekrümmte Zuleitung 7 für das unter Druck stehende, zu filternde Fluid auf, die zu mindestens einer Durchlaßöffnung - gezeigt ist die Durchlaßöffnung 8 - in den Deckel führt.

An den oberen Rand des Gefäßes 1 ist ein ringförmiger nach außen reichender Flansch 9 angeschweißt auf dessen Oberseite 10 sich ein ebenfalls ringförmiger Flansch 11 eines Stützkorbs 12 abstützen kann. Hierzu weist der Flansch 11 des Stützkorbs auf seiner Unterseite eine umlaufende ringförmige Nut 13 auf, in die ein O-Ring 14 eingelegt ist. Dieser O-Ring übt unter dem Anpreßdruck, der auf ihn insbesondere durch den Deckel 2 ausgeübt wird, eine Dichtfunktion aus, welche das ungefilterte Fluid in in dem Gefäß 1 an einem Austritt nach außen hindert. - Auf seiner Innenseite ist der Flansch 11 des Stützkorbs mit einem nach innen und oben offenen Profil ausgebildet, welches aus einer annähernd L-förmigen Nut 15 und einer nach unten reichenden Anphasung 16 besteht. Der Flansch des Stützkorbs ist mit einer nach unten reichenden Seitenfläche 17' verlängert, an welcher der in seinem oberen Abschnitt annähernd zylindrische und sich unten kegelstumpfförmig verjüngende Stützkorb angebracht ist. (Der untere Abschnitt des Stützkorbs ist in Fig. 1 nicht dargestellt.)

In den Stützkorb eingesetzt werden kann ein Filterbeutel -in der Zeichnung nicht gezeigt - der an einem Filterelementträger 17 mit einem oben angeformten Filterdichtelement 18 durch Kleben, Klemmen, Schweißen oder Anspritzen angebracht sein kann.

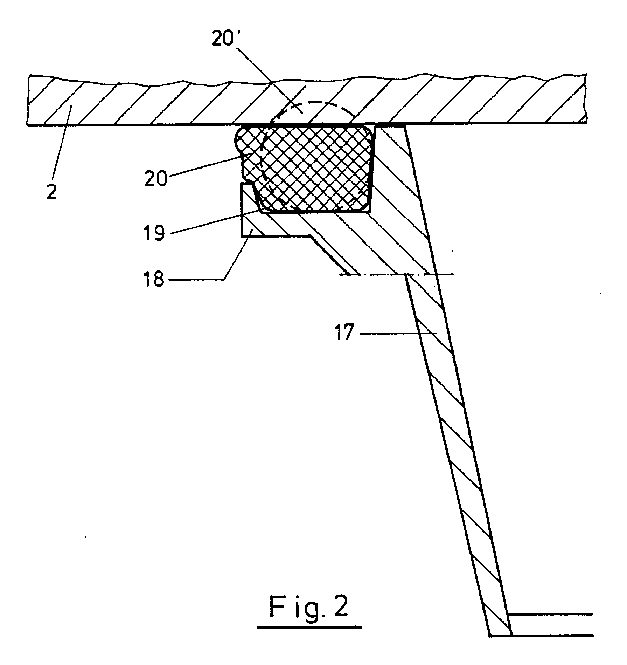

Das Filterdichtelement 18 weist auf seiner Außenseite ein abgestuftes und an seinem unteren Abschnitt geschrägtes Profil auf, siehe Fig. 2, welches formschlüssig in die in Fig. 1 dargestellte L-förmige Nut 15 mit Anphasung des Flansches 11 paßt. Wie Fig. 2 weiter zeigt, geht das Filterdichtelement als oberer Abschnitt des Filterelementträgers 17 in diesen einstückig über. Aus dem Filterdichtelement 18 ist eine nach oben und nach außen offene Nut 19 ausgeformt, die einen aus Gummi oder einem weichen Kunststoff bestehenden inneren O-Ring 20 aufnimmt. Der im unbelasteten Zustand runde Querschnitt des O-Rings ist mit einer unterbrochenen Linie bei 20' dargestellt. Die mit voll ausgezeichneter Linie gezeigte Form des O-Rings 20 entsteht durch Verformung bei Andruck des Deckels 2. Der O-Ring 20 verformt sich dabei nicht nur an seiner Oberseite zu dem Deckel 2 hin, sondern wird auch seitlich aus der offenen Nut etwas herausgequetscht, so daß er gegen den in Fig. 1 senkrechten Abschnitt der L-förmigen Nut in dem Flansch 11 des Stützkorbs 12 drückt und damit eine Zentrierung und eine sichere Abdichtfunktion gegen den Übertritt des ungefilterten Fluid aus dem Inneren des Filterbeutels und des Filterelementträgers in den äußeren Bereich innerhalb des Gefäßes 1 verhindert, in dem sich nur gefiltertes Fluid befinden soll. Somit resultiert aus einer axialen und radialen Quetschung des O-Rings eine doppelte Dichtfunktion, nämlich außer der oben beschriebenen Dichtung zwischen den Bereichen nicht gefilterten Fluids und gefilterten Fluids, eine Abdichtung des Inneren des Gefäßes 1 insgesamt nach außen. Diese Dichtfunktion braucht nur auf der Unterseite des Flansches 11 des Stützkorbs 12 durch den konzentrisch zu dem inneren O-Ring 20 angeordneten äußeren O-Ring 14, wie oben beschrieben, ergänzt zu werden. Mit anderen Worten, der Flansch 11 des Stützkorbs wird zwischen dem Flansch 9 des Gefäßes 1 und dem Deckel über den äußeren O-Ring 14 und den inneren O-Ring 20 sowie das Filterdichtelement 18 eingeklemmt. Weitere Dichtelemente sind für die beschriebenen Dichtfunktionen nicht erforderlich oder wünschenswert.

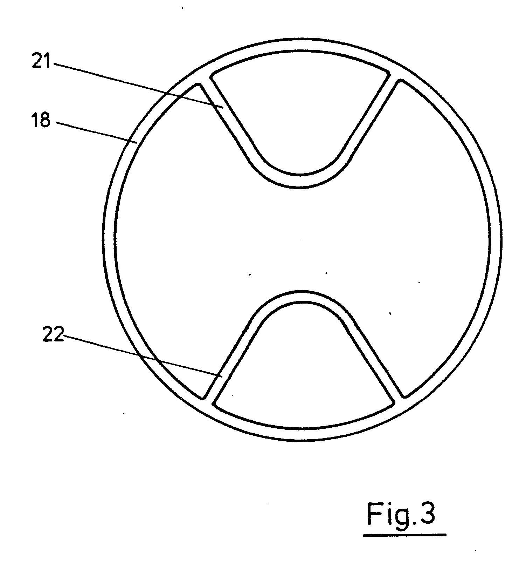

Das Filter wird dadurch funktionsfähig gemacht, daß der Filterbeutel mit dem Filterelementträger 17 und dem Filterdichtelement 18 in den Stützkorb eingesetzt wird, so daß das Filterdichtelement 18 in der beschriebenen Weise in der L-förmigen Nut 15 des Flansches 11 des Stützkorbs sitzt. Nach Einsetzen des Filterbeutels mit dem Stützkorb in das Gefäß 1 wird der Deckel 2 geschlossen und durch Verdrehen der Knebelköpfe 5, 6 auf den innere O-Ring 20 gepreßt, wobei sich gleichzeitig der äußere O-Ring 14 unter dem Andruck verformt. Zur Entnahme des Filterbeutels aus dem Filter wird in umgekehrter Reihenfolge vorgegangen, wobei der Filterbeutel durch an das Filterdichtelement 18 angeformte Handgriffe 21, 22 einfach aus dem Stützkorb herausgezogen werden kann. Die Handgriffe 21, 22 sind in Fig. 3 gezeigt, die eine stark vereinfachte Darstellung des Filterdichtelements 18 ohne Einzelheiten des Profils beinhaltet.

**Ansprüche**

1. Filter für unter Druck stehendes Fluid mit einem Gefäß, welches einen Filterkessel (1) sowie einen gegen den Filterkessel spannbaren Deckel (2) aufweist, mit einem in den Filterkessel einsetzbaren Stützkorb (12), der einen oberen zwischen dem Deckel und dem Filterkessel einklemmbaren ringförmigen Flansch (11) mit einem nach innen und oben offenen Profil hat, in das ein profiliertes Filterdichtelement (18) eines ringförmigen Filterbeutelträgers passend einsetzbar ist, wobei aus dem profilierten Filterdichtelement (18) eine nach oben offene Nut (19) ausgeformt ist, in die ein innerer O-Ring (20) einsetzbar ist,
**dadurch gekennzeichnet,**
daß die Nut (19) auch nach außen offen ist.

2. Filter nach Anspruch 1,
**dadurch gekennzeichnet,**
daß der ringförmige Flansch (11) des Stützkorbs (12) außer dem nach innen und oben offenen Profil (15, 16) lediglich eine konzentrische Nut (13) aufweist, die nach unten offen ist und einen äußeren O-Ring aufnimmt, der sich auf den Filterkessel dichtend anlegt.

3. Filter nach Anspruch 1,
**dadurch gekenzeichnet,**
daß das Filterdichtelement (18) des Filterbeutelträgers (17) in einen annähernd kegelstumpfförmigen nach unten reichenden Einsatz übergeht, an dem ein Filterbeutel angebracht ist.

4. Filter nach einem der Ansprüche 1 - 3,
**dadurch gekennzeichnet,**
daß in dem Filterbeutelträger von oben ergreifbare Handgriffe (21, 22) angeformt sind.

Fig. 1

20'

20

2

19

18

17

<u>Fig. 2</u>

21
18
22

Fig.3